# EUROPÄISCHE PATENTSCHRIFT

(11) **EP 2 412 079 B1**
(45) Veröffentlichungstag und Bekanntmachung des Hinweises auf die Patenterteilung: **01.03.2017**
(21) Anmeldenummer: 10710214.7
(22) Anmeldetag: 17.03.2010
(51) Int. Cl.: H02K 3/47, H02K 1/27

(54) **ELEKTROMOTOR**
ELECTRIC MOTOR
MOTEUR ÉLECTRIQUE

(30) Priorität: 24.03.2009 DE 102009014147
(43) Veröffentlichungstag der Anmeldung: 01.02.2012
(73) Patentinhaber: SEW-EURODRIVE GmbH & Co. KG, 76646 Bruchsal (DE)
(72) Erfinder: EPSKAMP, Torsten, 75015 Bretten (DE)
(74) Vertreter: Tüngler, Eberhard
(86) Internationale Anmeldenummer: PCT/EP2010/001659
(87) Internationale Veröffentlichungsnummer: WO 2010/108622

(56) Entgegenhaltungen:
- WO-A1-2007/083724
- JP-A- 2003 009 491
- JP-A- 2004 187 344

## Beschreibung

Die Erfindung betrifft einen Elektromotor.

Es ist bekannt, bei Drehstrommotoren im Stator eine Drehstromwicklung vorzusehen, bei der die einzelnen Statorwicklungen in Umfangsrichtung überlappend ausgeführt sind. Solche Drehstrommotoren sind beispielsweise als Asynchronmotoren oder als Synchronmotoren ausführbar, wobei letztere einen Rotor mit Dauermagneten aufweisen.

Aus der JP 2004 187344 A ist ein Elektromotor bekannt, bei dem Wicklungen auf zahnartigen Vorsprüngen angeordnet sind.

Aus der JP 2003 009491 A ist ebenfalls ein ähnlicher Motor bekannt.

Aus der WO 2007/083724 A1 ist ein Elektromotor bekannt, bei dem ein Verhältnis von 15 zu 10 als Anzahl der Wicklungen zur Anzahl der Dauermagnete vorgesehen ist.

Der Erfindung liegt daher die Aufgabe zugrunde, einen Elektromotor weiterzubilden, wobei der Motor einfach herzustellen und bei hohen Frequenzen mit gutem Wirkungsgrad betreibbar sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass der Elektromotor, ein einen Rotor umschließendes Statorjoch umfasst, wobei
an der Innenseite des Statorjochs in Umfangsrichtung nebeneinander vorgesehene Wicklungen, insbesondere also in Umfangsrichtung nicht überlappende, angeordnet sind,
wobei am Rotor Dauermagnete angeordnet sind, deren Hauptfluss zumindest teilweise durch den Raumbereich der Wicklungen vorgesehen ist.

Von Vorteil ist dabei, dass der Motor einfach herstellbar ist, da die Wicklungen nicht überlappend ausgeführt sind und somit keine aufwendige Spuleneinziehmaschine notwendig ist im Vergleich zu Drehstromwicklungen. Außerdem ist der Motor bei hohen Frequenzen mit gutem Wirkungsgrad betreibbar, da die Induktivität gering ist. Die Wicklungen liegen also nicht in Nuten des Statorblechpakets sondern werden vom Fluss direkt durchsetzt. Somit ist ein sehr schnell drehender hochpoliger Motor realisierbar, der einen sehr guten Wirkungsgrad aufweist. Die zugehörige niedrige Induktivität bewirkt, dass sich bei gegebener Spannung ein niedriger Strombedarf ergibt. Da außerdem keine verschränkte, also überlappende Wicklung notwendig ist, ist ein nur geringes Wickelkopfvolumen ausführbar. Nuten sind also bei der Herstellung des Motors verzichtbar.

Bei einer vorteilhaften Ausgestaltung sind am Rotor Dauermagnete angeordnet, deren Hauptfluss zumindest zu als 10 % oder sogar zu mehr als 20% durch den Raumbereich der Wicklungen vorgesehen ist. Von Vorteil ist dabei, dass ein besonders hoher Wirkungsgrad auch bei sehr hochpoligen und/oder hochfrequent betriebenen Motoren erreichbar ist.

Erfindungsgemäss sind am Statorjoch nach innen gerichtete zahnartige Vorsprünge vorgesehen, um die herum eine jeweilige Wicklung vorgesehen ist. Von Vorteil ist dabei, dass ein gewünschter Anteil des Flusses mittels der Ausformung des Vorsprungs durch diesen leitbar ist.

Bei einer vorteilhaften Ausgestaltung ist die radiale Ausdehnung der zahnartigen Vorsprünge kleiner als die radiale Breite der Wicklungen. Von Vorteil ist dabei, dass stets ein genügend großer Anteil des Hauptflusses durch die Wicklungen geführt ist, wodurch die Induktivität des Motors daher klein haltbar ist und somit bei hohen Frequenzen oder hohen Drehzahlen beziehungsweise entsprechender Polzahl ein hoher Wirkungsgrad erreichbar ist.

Bei einer vorteilhaften Ausgestaltung sind die Dauermagnete am Rotor derart angeordnet, dass in Umfangsrichtung benachbart vorgesehene Dauermagnete in radialer Richtung entgegengesetzt magnetisiert sind. Von Vorteil ist dabei, dass der Rotor einem Synchronmotor konventioneller Bauart entspricht und somit eine Baureihe realisierbar ist, bei der wahlweise ein Stator derart wählbar ist, dass als erste Variante ein Synchronmotor und als zweite Variante der oben beschriebene Motor herstellbar ist.

Bei einer vorteilhaften Ausgestaltung ist der magnetische Widerstand vom jeweiligen Dauermagnet zu dem vom Dauermagnet aus gesehen nicht mit einer Wicklung abgedeckten Bereich des Statorjochs kleiner als der magnetische Widerstand vom jeweiligen Dauermagnet zu dem vom Dauermagnet aus gesehen mit einer Wicklung abgedeckten Bereich des Statorjochs.

Von Vorteil ist dabei, dass nur ein Teil des Hauptflusses durch das Statorjoch führt, ein anderer Teil jedoch durch die Wicklungen geführt ist. Bei einer anderen vorteilhaften Ausgestaltung ist der gesamte magnetische Widerstand von einem jeweiligen Magnet zum Statorjochrücken, also Statorblechpaket ohne zahnartigen Vorsprung, kleiner als der gesamte magnetische Widerstand vom zahnartigen Vorsprung. Von Vorteil ist dabei, dass wiederum ein Teil des Hauptflusses durch die Wicklungen geführt ist, da die Feldlinien entsprechend dem magnetischen Widerstand verlaufen.

Bei einer vorteilhaften Ausgestaltung nimmt der zahnartige Bereich weniger als die Hälfte des von der Wicklung umgebenen Bereichs ein. Von Vorteil ist dabei, dass ein großer Teil des Hauptflusses durch die Wicklung führbar ist und somit eine niedrige Induktivität realisierbar ist.

Erfindugsgemäss sind Verhältnisse von 24 zu 16, 21 zu 14, 18 zu 12, 15 zu 10, 12 zu 8 vorgesehen, wobei hierbei jeweils das Verhältnis Anzahl der Wicklungen zu Anzahl der Dauermagnete gemeint ist. Von Vorteil ist dabei, dass hierbei besonders günstige Motor Konfigurationen erreichbar sind, wobei mit geringem Aufwand hohe Wirkungsgrade bei hohen Frequenzen erzielbar sind.

Bei einer vorteilhaften Ausgestaltung ist das Material des zahnartigen Vorsprungs nur teilweise gesättigt betrieben vorgesehen, insbesondere auch bei maximaler Auslastung des Elektromotors. Von Vorteil ist dabei, dass hohe Wirkungsgrade erreichbar sind.

Bei einer vorteilhaften Ausgestaltung trägt der Hauptfluss zur Erzeugung des Drehmoments bei, insbesondere dass die Stärke des Hauptflusses dem vom Elektromotor erzeugten Drehmoment proportional ist. Von Vorteil ist dabei, dass Streufluss nicht berücksichtigt ist, da er zur Drehmomenterzeugung nicht beiträgt.

Weitere Vorteile ergeben sich aus den Unteransprüchen.

### Bezugszeichenliste

1 Statorjoch, Statorblechpaket
2 Wicklung
3 Wicklung
4 Wicklung
5 Wicklung
6 Dauermagnet
7 Dauermagnet
8 Rotorjoch

Die Erfindung wird nun anhand von Abbildungen näher erläutert:

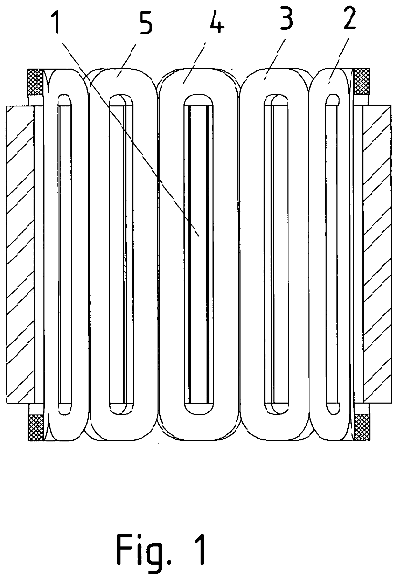

In der Figur 1 ist ein Wickelschema für einen erfindungsgemäßen Elektromotor ausschnittsweise schematisch angedeutet.
In der Figur 2 ist ein schematisch ausgeführter Querschnitt durch den erfindungsgemäßen Motor gezeigt.

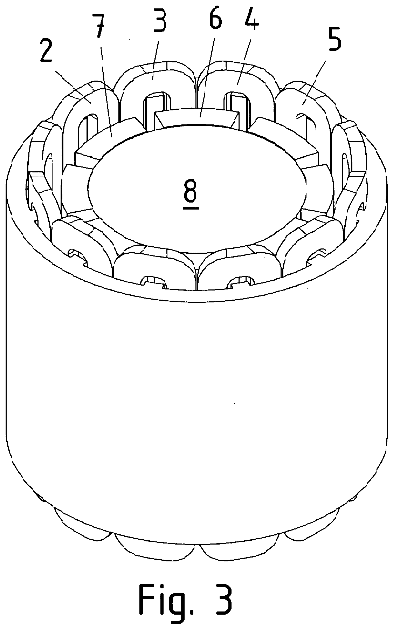

In der Figur 3 ist eine Schrägansicht mit Blickrichtung auf den Stator von außen gezeigt. Hierbei weist der Stator des Elektromotors ein Statorjoch 1 auf, das vorzugsweise als Statorblechpaket ausgeführt ist. Das Statorblechpaket bildet hierbei einen Hohlkörper, an dessen innerem Umfang die Wicklungen (2, 3, 4, 5) vorgesehen sind. In Figur 2 ist verdeutlicht, dass die Wicklungen (2, 3, 4, 5) in Umfangsrichung nicht überlappend ausgeführt sind.

Der Rotor weist ein Rotorjoch 8 auf, das vorzugsweise als Blechpaket oder als Stahlteil ausgeführt ist. Wichtig hierbei ist, dass ein ferromagnetisches Material verwendet wird. Am Umfang des Rotors sind Dauermagnete (6, 7) vorgesehen, deren Magnetisierungsrichtung im Wesentlichen in radialer Richtung vorgesehen ist, wobei benachbarte Dauermagnete eine jeweils entgegengesetzte Magnetisierungsrichtung aufweisen.

Die Anzahl der Dauermagnete (6, 7) am gesamten Umfang des Rotors ist gerade.

Erfindungsgemäss sind Verhältnisse 24 zu 16, 21 zu 14, 18 zu 12, 15 zu 10, 12 zu 8 vorgesehen, wobei hierbei jeweils das Verhältnis Anzahl der Wicklungen (2, 3, 4, 5) zu Anzahl der Dauermagnete (6, 7) gemeint ist.

Die Dauermagnete sind stoffschlüssig am Rotorjoch befestigt, beispielsweise geklebt. In weiteren alternativen Ausführungsformen sind die Magnete im Rotorjoch eingelassen, also in Vertiefungen oder Ausnehmungen desselben vorgesehen.

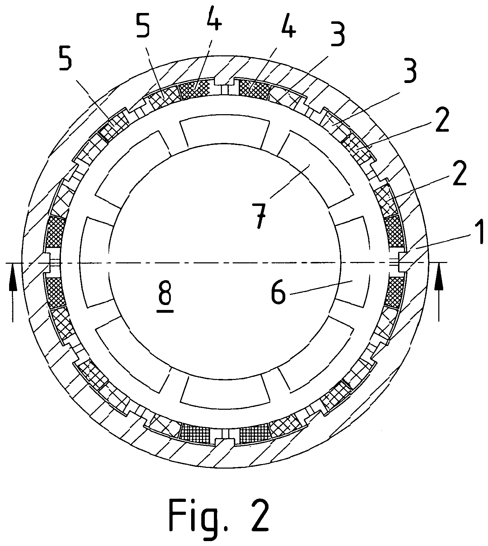

Figur 2 zeigt auch nach radial innen hervorstehende zahnartige Vorsprünge, um die herum die Wicklungen jeweils vorgesehen sind. In Figur 2 ist einem Zahn jeweils eine Wicklung (2, 3, 4, 5) eineindeutig zugeordnet.

Die Wicklung beansprucht in radialer Richtung jeweils eine Breite, die größer ist als die Breite des jeweils zugeordneten zahnartigen Vorsprungs. Mit anderen Worten gesagt, dringt der zahnartige Vorsprung radial nur teilweise in den radialen Bereich der Wicklung ein.

Bei weiteren Beispielen, die nicht Teil der beanspruchten Erfindung sind, entfallen die zahnartigen Vorsprünge ganz oder sind radial gleich oder mehr ausgedehnt als die jeweilige Wicklung (2, 3, 4, 5).

In allen erfindungsgeäßen Ausführungsbeispielen durchdringt der von den Statorwicklungen erzeugte Hauptfluss hierbei auch die Wicklungen (2, 3, 4, 5) in radialer Richtung.

Dies gilt unabhängig davon, ob der zahnartige Vorsprung bei maximaler Stärke des von den Statorwicklungen erzeugten Hauptflusses vollständig oder nur teilweise gesättigt ist.

Unter Hauptfluss wird hier derjenige Teil des magnetischen Feldes verstanden, der zur Erzeugung des Drehmoments des Elektromotors beiträgt. Nicht zum Hauptfluss zählt Streufluss. Denn der Streufluss trägt nicht zur Erzeugung von Drehmoment bei.

Bei der Erfindung ist also wichtig, dass der gesamte magnetische Widerstand von einem jeweiligen Magnet zum Statorjochrücken, also Statorblechpaket ohne zahnartigen Vorsprung, kleiner ist als der gesamte magnetische Widerstand vom zahnartigen Vorsprung.

## Patentansprüche

1. Elektromotor, umfassend ein einen Rotor umschließendes Statorjoch (1), wobei an der Innenseite des Statorjochs (1) in Umfangsrichtung nebeneinander vorgesehene Wicklungen, also in Umfangsrichtung nicht überlappend, angeordnet sind,
wobei am Rotor Dauermagnete (6, 7) angeordnet sind, deren Hauptfluss zumindest teilweise durch den Raumbereich der Wicklungen (2, 3, 4, 5) vorgesehen ist,
wobei am Statorjoch (1) nach innen gerichtete zahnartige Vorsprünge vorgesehen sind, um die herum eine jeweilige Wicklung vorgesehen ist,
wobei die radiale Ausdehnung der zahnartigen Vorsprünge kleiner ist als die radiale Breite der Wicklungen (2, 3, 4, 5),
**dadurch gekennzeichnet, dass**
Verhältnisse von 24 zu 16, 21 zu 14, 18 zu 12 oder 12 zu 8 vorgesehen sind, wobei hierbei jeweils das Verhältnis Anzahl der Wicklungen (2, 3, 4, 5) zu Anzahl der Dauermagnete (6, 7) gemeint ist.

2. Elektromotor nach mindestens einem der vorangegangenen Ansprüche,
**dadurch gekennzeichnet, dass**
am Rotor Dauermagnete (6, 7) angeordnet sind, deren Hauptfluss zumindest zu als 10 % oder sogar zu mehr als 20% durch den Raumbereich der Wicklungen (2, 3, 4, 5) vorgesehen ist.

3. Elektromotor nach mindestens einem der vorangegangenen Ansprüche,
**dadurch gekennzeichnet, dass**
die Dauermagnete (6, 7) am Rotor derart angeordnet sind, dass in Umfangsrichtung benachbart vorgesehene Dauermagnete (6, 7) in radialer Richtung entgegengesetzt magnetisiert sind.

4. Elektromotor nach mindestens einem der vorangegangenen Ansprüche,
**dadurch gekennzeichnet, dass**
der magnetische Widerstand vom jeweiligen Dauermagnet zu vom Dauermagnet aus gesehen nicht mit einer Wicklung abgedeckten Bereich des Statorjochs (1) kleiner ist als der magnetische Widerstand vom jeweiligen Dauermagnet zu vom Dauermagnet aus gesehen mit einer Wicklung abgedeckten Bereich des Statorjochs (1) ist.

5. Elektromotor nach mindestens einem der Ansprüche 1 bis 3,
**dadurch gekennzeichnet, dass**
der gesamte magnetische Widerstand von einem jeweiligen Magnet zum Statorjochrücken, also Statorblechpaket ohne zahnartigen Vorsprung, kleiner ist als der gesamte magnetische Widerstand vom zahnartigen Vorsprung.

6. Elektromotor nach mindestens einem der vorangegangenen Ansprüche,
**dadurch gekennzeichnet, dass**
der zahnartige Bereich weniger als die Hälfte des von der Wicklung umgebenen Bereichs einnimmt.

7. Elektromotor nach mindestens einem der vorangegangenen Ansprüche,
**dadurch gekennzeichnet, dass**
das Material des zahnartigen Vorsprungs nur teilweise gesättigt betrieben vorgesehen ist, insbesondere auch bei maximaler Auslastung des Elektromotors.

8. Elektromotor nach mindestens einem der vorangegangenen Ansprüche,
**dadurch gekennzeichnet, dass**
der Hauptfluss zur Erzeugung des Drehmoments beiträgt, insbesondere dass die Stärke des Hauptflusses dem vom Elektromotor erzeugten Drehmoment proportional ist.

## Claims

1. Electric motor, comprising a stator yoke (1) enclosing a rotor,
wherein windings are arranged on the inside of the stator yoke (1) in a manner provided beside one another in the circumferential direction, that is to say not overlapping in the circumferential direction,
wherein permanent magnets (6, 7) are arranged on the rotor, the main flux of which magnets is provided to be at least partially through the spatial region of the windings (2, 3, 4, 5),
wherein inwardly directed tooth-like projections are provided on the stator yoke (1), around which projections a respective winding is provided,
wherein the radial extent of the tooth-like projections is less than the radial width of the windings (2, 3, 4, 5),
**characterised in that**
ratios of 24 to 16, 21 to 14, 18 to 12 or 12 to 8 are provided,
wherein in each case the ratio of number of windings (2, 3, 4, 5) to number of permanent magnets (6, 7) is meant here.

2. Electric motor according to at least one of the preceding claims,
**characterised in that**
permanent magnets (6, 7) are arranged on the rotor, the main flux of which magnets is provided to be at least 10% or even more than 20% through the spatial region of the windings (2, 3, 4, 5).

3. Electric motor according to at least one of the preceding claims,
**characterised in that**
the permanent magnets (6, 7) are arranged on the rotor in such a way that permanent magnets (6, 7) provided adjacently in the circumferential direction are magnetised oppositely in the radial direction.

4. Electric motor according to at least one of the preceding claims,
**characterised in that**
the magnetic resistance of the respective permanent magnet in relation to the region of the stator yoke (1) not covered with a winding when seen from the permanent magnet, is less than the magnetic resistance of the respective permanent magnet to the region of the stator yoke (1) covered with a winding when seen from the permanent magnet.

5. Electric motor according to at least one of claims 1 to 3,
**characterised in that**
the total magnetic resistance of a respective magnet in relation to the stator yoke back, that is to say stator laminated stack without tooth-like projection, is less than the total magnetic resistance of the tooth-like projection.

6. Electric motor according to at least one of the preceding claims,
**characterised in that**
the tooth-like region occupies less than half of the region surrounded by the winding.

7. Electric motor according to at least one of the preceding claims,
**characterised in that**
the material of the tooth-like projection is provided to be operated only partially saturated, in particular even at maximum load of the electric motor.

8. Electric motor according to at least one of the preceding claims,
**characterised in that**
the main flux contributes to the generation of the torque, in particular **in that** the strength of the main flux is proportional to the torque generated by the electric motor.

## Revendications

1. Moteur électrique, comprenant une culasse de stator (1) entourant un rotor,
sachant que des bobinages prévus en juxtaposition en direction périphérique, donc ne se chevauchant pas en direction périphérique, sont disposé sur le côté intérieur de la culasse de stator (1),
sachant que des aimants permanents (6, 7), dont le flux principal est prévu pour s'étendre au moins partiellement à travers la région spatiale des bobinages (2, 3, 4, 5), sont disposés sur le rotor,
sachant que des saillies du genre dents, dirigées vers l'intérieur et autour desquelles est prévu un bobinage respectif, sont prévues sur la culasse de stator (1),
sachant que l'étendue radiale des saillies du genre dents est inférieure à la largeur radiale des bobinages (2, 3, 4, 5),
**caractérisé en ce qu'**il est prévu des rapports de 24 à 16, 21 à 14, 18 à 12 ou 12 à 8, sachant qu'on entend ici chaque fois par rapport le rapport du nombre de bobinages (2, 3, 4, 5) au nombre d'aimants permanents (6, 7).

2. Moteur électrique selon la revendication 1, **caractérisé en ce que** des aimants permanents (6, 7), dont le flux principal est prévu pour s'étendre au moins pour plus de 10% ou même pour plus de 20% à travers la région spatiale des bobinages (2, 3, 4, 5), sont disposés sur le rotor.

3. Moteur électrique selon au moins une des revendications précédentes, **caractérisé en ce que** les aimants permanents (6, 7) sont disposés sur le rotor de telle sorte que des aimants permanents (6, 7) prévus voisins en direction périphérique sont magnétisés en opposition en direction radiale.

4. Moteur électrique selon au moins une des revendications précédentes, **caractérisé en ce que** la résistance magnétique de l'aimant permanent respectif par rapport à la région de la culasse de stator (1) qui, considéré depuis l'aimant permanent, n'est pas couverte par un bobinage est inférieure à la résistance magnétique de l'aimant permanent respectif par rapport à la région de la culasse de stator (1) qui, considéré depuis l'aimant permanent, est couverte par un bobinage.

5. Moteur électrique selon au moins une des revendications 1 à 3, **caractérisé en ce que** la résistance magnétique totale d'un aimant respectif par rapport au dos de la culasse de stator, donc à l'empilage de tôles de stator sans saillie du genre dent, est inférieure à la résistance magnétique totale par rapport à la saillie du genre dent.

6. Moteur électrique selon au moins une des revendications précédentes, **caractérisé en ce que** la région du genre dent occupe moins de la moitié de la région entourée par le bobinage.

7. Moteur électrique selon au moins une des revendications précédentes, **caractérisé en ce que** le matériau de la saillie du genre dent est prévu pour une exploitation seulement partiellement saturée, en particulier également à la sollicitation maximale du moteur électrique.

8. Moteur électrique selon au moins une des revendications précédentes, **caractérisé en ce que** le flux principal contribue à produire le couple de rotation, en particulier **en ce que** l'intensité du flux principal est proportionnelle au couple de rotation produit par le moteur électrique.
